(19) Europäisches Patentamt
European Patent Office
Office européen des brevets

(11) Veröffentlichungsnummer: **0 373 432 A2**

# (12) EUROPÄISCHE PATENTANMELDUNG

(21) Anmeldenummer: **89122157.4**

(22) Anmeldetag: **01.12.89**

(51) Int. Cl.5: **C09B 11/12, C09B 69/06, //C09B11/16,C09B11/18**

(30) Priorität: **14.12.88 DE 3842013**

(43) Veröffentlichungstag der Anmeldung: **20.06.90 Patentblatt 90/25**

(84) Benannte Vertragsstaaten: **DE FR GB**

(71) Anmelder: **BAYER AG**
**D-5090 Leverkusen 1 Bayerwerk(DE)**

(72) Erfinder: **Berneth, Horst, Dr.**
**Erfurter Strasse 1**
**D-5090 Leverkusen 1(DE)**

## (54) Malachitgrün-Mischsalze.

(57) Malachitgrün-Mischsalze der Formel

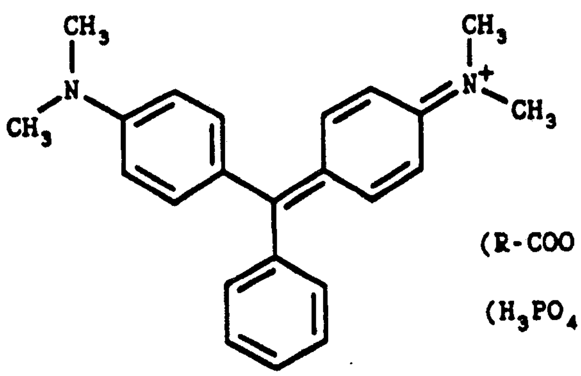

$$(R\text{-}COO^-)_n(H_2PO_4^-)_m(Cl^-)_o(R\text{-}COOH)_p(H_3PO_4)_q(R\text{-}COOM)_r(MH_2PO_4)_s(MCl)_t$$

worin
R den Rest einer Mono-, Di- oder Tricarbonsäure,
M ein Alkalimetall oder $NH_4$,
n + m + 0 = 1 und
p,q,r,s,t unabhängig voneinander 0 bis 10 bedeuten, unter der Voraussetzung, daß n und m oder n und q oder m und p nicht gleichzeitig 0 sind.

EP 0 373 432 A2

## Malachitgrün-Mischsalze

Salze des Malachitgrüns sind in der Regel sehr gut wasserlöslich und lassen sich deshalb nicht aus verdünnten wäßrigen Lösungen, wie sie beispielsweise bei der Herstellung des Malachitgrüns durch Oxidation seiner Leukobase anfallen, isolieren. Als gut kristallines und aus Wasser isolierbares Salz des Malachitgrüns ist das Oxalat bekannt, das jedoch auch nur aus relativ konzentrierten Lösungen ausfällt. Deshalb wird bei der technischen Herstellung von Malachitgrün stets die Carbinolbase zwischenisoliert und diese dann in Salze - meist in das Oxalat - überführt.

Es war deshalb überraschend, daß es Mischsalze des Malachitgrüns mit Carbonsäuren und Phosphorsäure gibt, die aus relativ verdünnten sauren Lösungen kristallin ausfallen, obwohl weder mit diesen Carbonsäuren noch Phosphorsäure allein unter diesen Bedingungen kristalline Salze erhalten werden können. Weiterhin überraschend war, daß diese Mischsalze in Wasser ausreichend löslich sind, um sie für Färbezwecke in üblicher Weise einzusetzen.

Gegenstand der Erfindung sind demnach Malachitgrün-Mischsalze der Formel

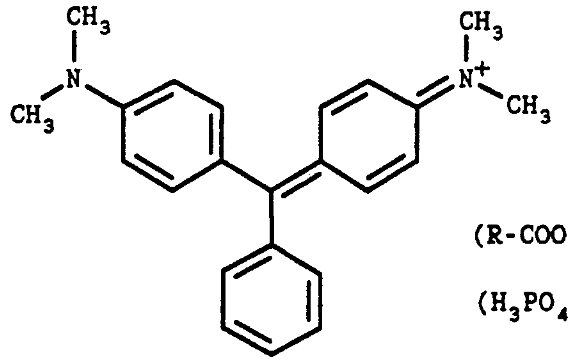

$$(R\text{-}COO^-)_n(H_2PO_4^-)_m(Cl^-)_o(R\text{-}COOH)_p$$

$$(H_3PO_4)_q(R\text{-}COOM)_r(MH_2PO_4)_s(MCl)_t$$

(I),

worin
R den Rest einer Mono-, Di- oder Tricarbonsäure,
M ein Alkalimetall oder $NH_4$,
n + m + o = 1 und
p,q,r,s,t unabhängig voneinander 0 bis 10 bedeuten, unter der Voraussetzung, daß n und m oder n und q oder m und p nicht gleichzeitig 0 sind.

Bevorzugt sind Malachitgrün-Mischsalze der Formel (I), worin
R Wasserstoff, $C_1$-$C_7$-Alkyl, das verzweigt und/oder durch $C_1$-$C_4$-Alkoxy, Hydroxy, Fluor, Chlor oder Brom substituiert sein kann, Cyclopentyl, Cyclohexyl oder Benzyl, das durch Methyl, Methoxy oder Chlor substituiert sein kann,
M Lithium, Natrium und Kalium,
m + n + o = 1 und
p,q,r,s,t unabhängig voneinander 0 bis 5 bedeuten, unter der Voraussetzung, daß n und m oder n und q oder m und p nicht gleichzeitig 0 sind, oder worin
R einen Rest der Formel
$HOOC\text{-}(CH_2)_u\text{-}X_v\text{-}(CH_2)_w\text{-}$,
X O, S oder -CH=CH-,
u und w unabhängig voneinander 0 bis 3,
v 0 oder 1,
wobei die C-Atome des Restes R durch $C_1$-$C_4$-Alkyl, $C_1$-$C_4$-Alkoxy, Hydroxy, Fluor, Chlor, Brom oder Hydroxycarbonyl substituiert sein können,
M Lithium, Natrium und Kalium,
m + n + o = 1,
p,q,r,s,t unabhängig voneinander 0 bis 5 bedeuten,unter der Voraussetzung, daß n und m oder n und q oder m und p nicht gleichzeitig 0 sind,

Beispiele für solche Carbonsäuren sind Ameisensäure, Essigsäure, Propionsäure, Glycolsäure, Milchsäure, Chloressigsäure, Methoxyessigsäure, Hexansäure, 2-Ethylhexansäure, Oxalsäure, Malonsäure, Bernsteinsäure, Dibrombernsteinsäure, Äpfelsäure, Weinsäure, Fumarsäure, Adipinsäure, Diglycolsäure, Schleimsäure, Sebacinsäure oder Citronensäure.

Besonders bevorzugt sind Malachitgrün-Mischsalze der Formel (I), worin
R Wasserstoff, Methyl, Ethyl, Hydroxymethyl, Methoxymethyl oder Chlormethyl,
M Natrium,
m + n + o = 1 und
p,q,r,s,t unabhängig voneinander 0 bis 3 bedeuten,unter der Voraussetzung, daß n und m oder n und q oder m und p nicht gleichzeitig 0 sind,
oder worin
R HOOC-, HOOC-$CH_2$- oder trans-HOOC-CH = CH-,
M Natrium,
m + n + o = 1 und
p,q,r,s,t unabhängig voneinander 0 bis 3 bedeuten, unter der Voraussetzung, daß n und m oder n und q oder m und p nicht gleichzeitig 0 sind

Ein weiterer Gegenstand der Erfindung ist ein Verfahren zur Herstellung von Malachitgrün-Mischsalzen der Formel (I), worin

R, M und m-t die oben angegebene Bedeutung besitzen,
dadurch gekennzeichnet, daß man der vorzugsweise salzsauren Farbstofflösung die Säure R-COOH oder ein Alkalioder Ammoniumsalz davon und Phosphorsäure oder ein Alkali- oder Ammoniumsalz davon zusetzt und dabei einen pH-Wert im Bereich 0,5 - 3, vorzugsweise 1-2, einstellt, bei diesem pH-Wert bis zur vollständigen Kristallisation bei 10-60 °C, vorzugsweise 15-30 °C verrührt und den Farbstoff durch Absaugen isoliert.

Zum Einstellen des erfindungsgemäßen pH-Bereiches werden vorzugsweise Säuren wie Salzsäure oder Hydroxide wie Natrium- oder Kaliumhydroxid eingesetzt.

Vorzugsweise werden 0,5 bis 2, besonders bevorzugt 0,8 bis 1,2 Äquivalente der Säure R-COOH oder eines Salzes davon und 1 bis 10, besonders bevorzugt 2 bis 7 Äquivalente Phosphorsäure oder eines Salzes davon eingesetzt.

Abhängig vom Verhältnis Säure R-COOH zu Phosphorsäure läßt sich die Zusammensetzung der Mischsalze der Formel (I) in weiten Grenzen beeinflussen.

Die zur Herstellung der Malachitgrün-Mischsalze der Formel (I) benutzte wäßrige Malachitgrünlösung kann durch Oxidation von Leukomalachitgrün hergestellt werden. Diese oxidation erfolgt üblicherweise in wäßrig-salzsaurer Lösung mit beispielsweise Bleidioxid oder Braunstein.

Nach der Oxidation kann das zweiwertige Blei in das Sulfat überführt und abfiltriert werden. Aus der verbleibenden Lösung kann dann durch Zusatz von R-COOH und Phosphorsäure oder ihrer Salze und Einstellen des pH-Wertes ein Malachitgrün-Mischsalz der Formel (I) ausgefällt werden.

Bei der Oxidation mit Braunstein kann bei vielen Carbonsäuren, z.B. Ameisensäure, Essigsäure, Glycolsäure, auf eine Abtrennung des zweiwertigen Mangans verzichtet werden. Man filtriert nur evtl. aus dem Braunstein stammende unlösliche Produkte ab und fällt aus der verbleibenden Lösung, wie oben beschrieben, das Malachitgrün-Mischsalz aus. Bei Carbonsäuren, wie z.B. Oxalsäure, die mit zweiwertigem Mangan schwerlösliche Salze bilden, fällt man durch Zusatz dieser Carbonsäure allein - häufig im Überschuß zugesetzt - das entsprechende Mangansalz aus und filtriert es ab. Zur verbleibenden Lösung gibt man Phosphorsäure oder ein Salz davon und evtl. weitere Carbonsäure und fällt, wie oben beschrieben, das Malachitgrün-Mischsalz aus.

Die Oxidation von Malachitgrün-Leukobase läßt sich bekanntermaßen auch in beispielsweise Essigsäure mit Luft unter Zusatz von Katalysatoren durchführen (DE-OS 2 736 679, DE-OS 2 853 822). Nach beendeter Oxidation zieht man vorteilhaft einen Teil des Lösungsmittels ab, verdünnt mit Wasser, führt eine Klärfiltration durch, setzt Phosphorsäure oder eines ihrer Salze zu und stellt den pH-Wert ein. Man erhält so ein Malachitgrün-Mischsalz, das beispielsweise Essigsäure enthält.

Weiterhin läßt sich Malachitgrün durch Kondensation von 4-Dimethylamino-benzophenon und Dimethylanilin herstellen. Kondensationsmittel sind Phosphoroxychlorid, Phosphorpentachlorid, Phosphorpentoxid, Phosgen, Oxalylchlorid oder Thionylchlorid, wobei bei Temperaturen zwischen 20 und 100 °C gearbeitet wird. Besonders bevorzugt ist Phosphoroxychlorid.

Nach wäßriger Aufarbeitung werden der Farbstofflösung noch eine Carbonsäure oder ein Salz davon und - falls das Kondensationsmittel keinen Phosphor enthält - Phosphorsäure oder ein Salz davon zugesetzt

und nach Einstellen des pH-Wertes das Malachitgrün-Mischsalz ausgefällt.

Die Malachitgrün-Mischsalze der Formel (I) stellen grüne, metallisch glänzende kristalline Feststoffe dar, die sich gut in Wasser lösen und zum Färben von sauer modifizierten Synthesefasern, vorzugsweise Polyacrylnitril, tannierter Baumwolle und Papier eingesetzt werden können.

Bei den im folgenden angegebenen Formeln der Farbstoff-Mischsalze, die auch freie Säure enthalten, wird bei pK-Wert-Unterschieden von $\geqq 1$ der beteiligten Säuren die stärker saure (häufig Phosphorsäure) als Anion geschrieben, bei pH-Wert-Unterschieden <1 werden beide Säuren als Anion formuliert.

## Beispiel 1

90,3 g Leukomalachitgrün werden in einer Mischung aus 100 ml Wasser und 86,5 g konz. Salzsäure gelöst und diese Lösung mit 500 ml Wasser verdünnt.

Nach Kühlen auf 2° C werden 165 g 40%ige wäßrige Bleidioxidsuspension zugesetzt. Die Temperatur läßt man dabei auf 15-20° C ansteigen. Nach 15 min werden 62,5 g Natriumsulfat zugesetzt und nach 1 h Rühren das ausgefallene Bleisulfat abfiltriert. Zum Filtrat gibt man 46,9 g Milchsäure und stellt mit konz. Salzsäure auf pH = 1,6. Nach 1 h werden 327 g Natriumdihydrogenphosphat-Dihydrat zugesetzt, wobei man mit konz. Salzsäure pH = 1,6 einstellt. Nach kurzer Zeit kristallisiert das Produkt aus. Es wird abgesaugt und bei 50° C im Vakuum getrocknet:

149 g (87 % der Theorie) grüne Kristalle vom Schmelzpunkt 134° C, die nach Elementaranalyse die ungefähre Zusammensetzung $[C_{23}H_{25}N_2{}^+][C_3H_5O_3{}^-]_{0,5}[H_2PO_4{}^-]_{0,5}[H_3PO_4]_{1,5}[NaCl]$ aufweisen.

## Beispiel 2

776,8 g Leukomalachitgrünlösung, hergestellt wie in Beispiel 1, werden nach Kühlen auf 0° C mit 91,5 g einer 34% igen wäßrigen Braunsteinsuspension versetzt. Die Temperatur steigt dabei auf 15° C. Nach 15 min werden 20,1 g Glycolsäure zugesetzt und mit konz. Salzsäure pH = 1,6 eingestellt. Nach 1 h werden 309 g Natriumdihydrogenphosphat-Dihydrat zugesetzt, wobei man mit konz. Salzsäure pH = 1,6 einstellt. Man rührt über Nacht, saugt das Kristallisat ab und trocknet bei 50° C im Vakuum:

55,1 g (38,6 % der Theorie) grüne Kristalle vom Schmelz punkt 188° C (Zers.) , die nach Elementaranalyse die ungefähre Zusammensetzung

$[C_{23}H_{25}N_2{}^+][Cl^-]_{2/3}[H_2PO_4{}^-]_{1/3}[C_2H_4O_3]_{2/3}[H_3PO_4]_{2/3}$ $[NaCl]_{1/3}$ haben.

## Beispiel 3

776,8 g Leukomalachitgrvnlösung, hergestellt wie in Beispiel 1, werden mit 400 g Eis versetzt und bis zum vollständigen Auftauen des Eises verrührt. 91,5 g einer 34%igen wäßrigen Braunsteinsuspension werden zugesetzt. Während der Oxidation steigt die Temperatur auf 15° C an. Nach 15 min werden 50,2 g wasserfreie Oxalsäure zugesetzt. Man erwärmt auf 50° C, hält die Temperatur 1 h und stellt mit konz. Natronlauge auf pH = 2. Das ausgefallene Manganoxalat wird abgesaugt und mit 20 ml Wasser gewaschen. Nach Abkühlen auf 30° C werden 130,2 g Natriumdihydrogenphosphat-Dihydrat zugesetzt, wobei mit konz. Salzsäure pH = 1,6 eingestellt wird. Die grüne Suspension wird 4 h gerührt, abgesaugt und bei 50° C im Vakuum getrocknet: 115 g (80,1 % der Theorie) grüne Blättchen vom Schmelzpunkt 183° C, die nach Elementaranalyse die ungefähre Zusammensetzung

$[C_{23}H_{25}N_2{}^+][C_2HO_4{}^-]_{0,5}[H_2PO_4{}^-]_{0,5}[HOOC\text{-}COOH]_{0,5}[NaCl]_{0,5}$ $[H_2O]_{1,5}$ haben.

## Beispiel 4

Arbeitet man wie in Beispiel 3, setzt aber nach Abtrennen des Manganoxalats weitere 25,6 g wasserfreie Oxalsäure und 65 g Natriumdihydrogenphosphat-Dihydrat ein, so erhält man 133 g (70 % der Theorie) grüne Blättchen vom Schmelzpunkt 160° C, die nach Elementaranalyse die ungefähre Zusammensetzung

$[C_{23}H_{25}N_2{}^+]_3[C_2HO_4{}^-][H_2PO_4{}^-]_2[HOOC\text{-}COOH]_4[NaOOC\text{-}COOH]_3$ $[NaCl]_2[H_2O]_5$ haben.

Beispiel 5

Arbeitet man wie in Beispiel 3, setzt aber 48,6 g wasserfreie Oxalsäure und 292,5 g Natriumdihydrogenphosphat-Dihydrat ein, so erhält man 132,8 g (83,6 % der Theorie) grüne Blättchen vom Schmelzpunkt 181 °C, die nach Elementaranalyse die ungefähre Zusammensetzung
$[C_{23}H_{25}N_2^+][C_2HO_4^-]_{2/3}[H_2PO_4^-]_{1/3}[HOOC\text{-}COOH]_{1/3}[H_3PO_4]_{2/3}$ $[NaCl]_{2/3}[H_2O]_{4/3}$ haben.

Beispiel 6

Zu einer Mischung aus 24,4 g Dimethylanilin und 22,5 g 4-Dimethylamino-benzophenon tropfen während 2 h bei 60 °C 30,7 g Phosphoroxychlorid. Nach 2 h bei 60 °C wird die Schmelze auf 1 l Wasser bei 30 °C ausgetragen.
13,6 g wasserfreie Oxalsäure werden zugesetzt und mit konz. Natronlauge wird auf pH = 1,6 bis 1,7 eingestellt. Man rührt über Nacht und saugt dann das grüne Kristallisat ab. Nach Trocknen bei 50 °C erhält man 38,6 g (77 % der Theorie) grünes Pulver vom Schmelzpunkt 167 °C, das nach Elementaranalyse die ungefähre Zusammensetzung
$[C_{23}H_{25}N_2^+][C_2HO_4^-]_{0,5}[H_2PO_4^-]_{0,5}[HOOC\text{-}COOH][NaCl]_{0,5}$ besitzt.

Beispiel 7

99 g Leukomalachitgrün, 6 g Chloranil und 600 g Eisessig werden, wie in DE-OS 2 853 822 beschrieben, bei 30 °C intensiv mit Luft behandelt. Im Verlauf von etwa 12 h werden gleichmäßig insgesamt 1,2 g eines Gemisches aus Stickstoffmonoxid und Stickstoffdioxid, die aus Natriumnitrit mit Schwefelsäure erzeugt werden, zudosiert. Nach beendeter Oxidation werden 90 % des Lösungsmittels im Vakuum abgezogen. Die verbliebene Lösung wird mit 300 ml Wasser verdünnt, mit konz. Salzsäure auf pH = 1,6 eingestellt und von Unlöslichem abfiltriert. 187,2 g Natriumdihydrogenphosphat-Dihydrat werden zugesetzt und dabei mit Salzsäure der pH bei 1,6 gehalten. Es wird über Nacht gerührt, abgesaugt und bei 50 °C im Vakuum getrocknet: 102 g (64,4 % der Theorie) grünes Pulver vom Schmelzpunkt 173-175 °C, das nach Elementaranalyse die ungefähre Zusammensetzung
$[C_{23}H_{25}N_2^+][H_2PO_4^-][CH_3COOH]_{2/3}[H_3PO_4]_{1/3}[NaCl]_{0,5}$ besitzt.

Beispiele 8 - 22

Die folgenden Beispiele lassen sich analog Beispiel 1-4 oder nach folgendem vereinfachten Verfahren herstellen: 7,9 g Malachitgrün-Carbinolbase werden in 40 ml Wasser durch Zusatz von konz. Salzsäure gelöst und ein pH von 1,6 eingestellt. X g Carbonsäure und 27,2 g Natriumdihydrogenphosphat-Dihydrat werden zugesetzt und der pH mit konz. Salzsäure auf 1,6 gehalten. Dann wird bis zur Kristallisation gerührt, abgesaugt und bei 50 °C getrocknet.

| Beisp. | R | X/g | Fp/°C | $C_{23}H_{25}N_2^+$ | $RCOO^-$ | $H_2PO_4^-$ | RCOOH | $H_3PO_4$ | NaCl | RCOONa | $NaH_2PO_4$ |
|---|---|---|---|---|---|---|---|---|---|---|---|
| 8 | $-CH_2CH_2-COOH$ | 5,1 | 133 | 1 | - | 1 | 1,5 | 5 | 1,5 | - | - |
| 9 | $-CH_2-COOH$ | 4,5 | 123 | 1 | 2/3 | 1/3 | - | 1 | 1 | - | - |
| 10 | 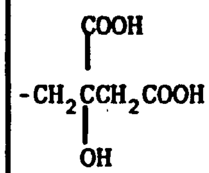 | 9,1 | 124 | 1 | 2/3 | 1/3 | - | 1,5 | 1 | - | - |
| 11 | 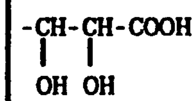 | 6,5 | 122 | 1 | 0,5 | 0,5 | 0,5 | 1 | 1 | 0,5 | 0,5 |
| 12 | $-CH\stackrel{t}{=}CH-COOH$ | 5,0 | 142 | 1 | 0,5 | 0,5 | 2,5 | 1 | 2/3 | - | - |
| 13 | 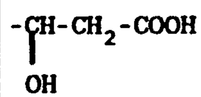 | 5,8 | 106 | 1 | 2/3 | 1/3 | - | 1,5 | 1 | - | - |
| 14 | $-(CH_2)_4-COOH$ | 6,3 | 121 | 1 | - | 1 | 2 | 1 | 1 | - | - |
| 15 | $-CH_2CH_3$ | 3,2 | 187 | 1 | - | 1 | 1/3 | 2/3 | 2/3 | - | - |
| 16 | $-CH_2OH$ | 3,3 | 129 | 1 | - | 1 | 0,5 | 1,5 | 1,5 | - | - |

| Beisp. | R | X/g | Fp/°C | $C_{23}H_{25}N_2^+$ | $RCOO^-$ | $H_2PO_4^-$ | RCOOH | $H_3PO_4$ | NaCl | RCOONa | $NaH_2PO_4$ |
|---|---|---|---|---|---|---|---|---|---|---|---|
| 17 | $-CH_2OCH_2COOH$ | 5,8 | 138 | 1 | - | 1 | 1 | 0,5 | 1 | - | 1/3 |
| 18 | $-(CHOH)_4COOH$ | 9,0 | 167 | 1 | - | 1 | 2 | 1,5 | 1,5 | - | - |
| 19 | $-CH_3$ | 2,6 | 188 | 1 | - | 1 | 0,5 | 1 | 1 | - | - |
| 20 | $-CH-C_4H_9$<br>$\;\;\vert$<br>$\;C_2H_5$ | 6,2 | 110 | 1 | - | 1 | 1,5 | 1 | 1 | - | - |
| 21 | H | 2,0 | 188(Z) | 1 | - | 1 | 1/2 | 1 | 1 | - | - |
| 22 | $-(CH_2)_6-COOH$ | 8,7 | 109 | 1 | - | 1 | 3,5 | 0,5 | 0,5 | - | - |

## Ansprüche

1. Malachitgrün-Mischsalze der Formel

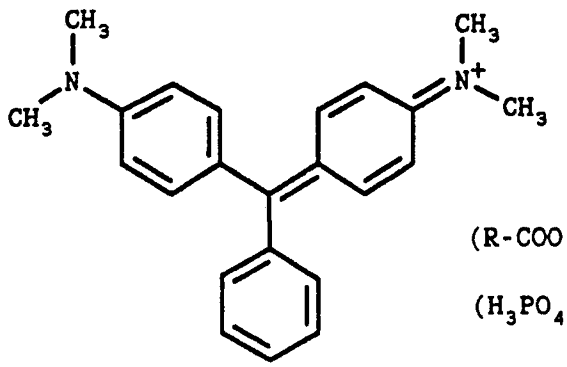

$$(R\text{-}COO^-)_n(H_2PO_4^-)_m(Cl^-)_o(R\text{-}COOH)_p$$

$$(H_3PO_4)_q(R\text{-}COOM)_r(MH_2PO_4)_s(MCl)_t$$

worin

R den Rest einer Mono-, Di- oder Tricarbonsäure,
M ein Alkalimetall oder $NH_4$,
n + m + 0 = 1 und
p,q,r,s,t unabhängig voneinander 0 bis 10 bedeuten, unter der Voraussetzung, daß n und m oder n und q oder m und p nicht gleichzeitig 0 sind.

2. Malachitgrün-Mischsalze gemäß Anspruch 1, worin
R Wasserstoff, $C_1$-$C_7$-Alkyl, das verzweigt und/oder durch $C_1$-$C_4$-Alkoxy, Hydroxy, Fluor, Chlor oder Brom substituiert sein kann, Cyclopentyl, Cyclohexyl oder Benzyl, das durch Methyl, Methoxy oder Chlor substituiert sein kann,
M Lithium, Natrium und Kalium,
m + n + o = 1 und
p,q,r,s,t unabhängig voneinander 0 bis 5 bedeuten, unter der Voraussetzung, daß n und m oder n und q oder m und p nicht gleichzeitig 0 sind.

3. Malachitgrün-Mischsalze gemäß Anspruch 1 und 2, worin
R Wasserstoff, Methyl, Ethyl, Hydroxymethyl, Methoxymethyl oder Chlormethyl,
M Natrium,
m + n + o = 1 und
p,q,r,s,t unabhängig voneinander 0 bis 3 bedeuten, unter der Voraussetzung, daß n und m oder n und q oder m und p nicht gleichzeitig 0 sind.

4. Malachitgrün-Mischsalze gemäß Anspruch 1, worin
R einen Rest der Formel
$HOOC\text{-}(CH_2)_u\text{-}X_v\text{-}(CH_2)_w\text{-}$,
X O, S oder -CH=CH-,
u und w unabhängig voneinander 0 bis 3,
v 0 oder 1,
wobei die C-Atome des Restes R durch $C_1$-$C_4$-Alkyl, $C_1$-$C_4$-Alkoxy, Hydroxy, Fluor, Chlor, Brom oder Hydroxycarbonyl substituiert sein können,
M Lithium, Natrium und Kalium,
m + n + o = 1,
p,q,r,s,t unabhängig voneinander 0 bis 5 bedeuten,unter der Voraussetzung, daß n und m oder n und q oder m und p nicht gleichzeitig 0 sind.

5. Malachitgrün-Mischsalze gemäß Anspruch 1 und 4, worin
R HOOC-, $HOOC\text{-}CH_2$- oder trans-HOOC-CH=CH-,
M Natrium,
m + n + o = 1 und
p,q,r,s,t unabhängig voneinander 0 bis 3 bedeuten, unter der Voraussetzung, daß n und m oder n und q oder m und p nicht gleichzeitig 0 sind.

6. Verfahren zur Herstellung von Malachitgrün-Mischsalzen des Anspruchs 1, dadurch gekennzeichnet, daß man der vorzugsweise salzsauren Farbstofflösung die Säure R-COOH oder ein Alkali- oder Ammoniumsalz davon und Phosphorsäure oder ein Alkali- oder Ammoniumsalz davon zusetzt und dabei einen pH-Wert im Bereich 0,5 -3, vorzugsweise 1-2 einstellt, bei diesem pH-Wert bis zur vollständigen Kristallisation bei 10-60 °C, vorzugsweise 15-30 °C verrührt und den Farbstoff durch Absaugen isoliert.

7. Verfahren zur Herstellung von Malachitgrün-Mischsalzen des Anspruchs 1 gemäß Anspruch 6, dadurch gekennzeichnet, daß man bezogen auf den Farbstoff 0,5 bis 2, vorzugsweise 0,8 bis 1,2 Äquivalente der Säure R-COOH oder eines Salzes davon und 1 bis 10, vorzugsweise 2 bis 7 Äquivalente Phosphorsäure oder eines Salzes davon einsetzt.

8. Verfahren zur Herstellung von Malachitgrün-Mischsalzen des Anspruchs 1 gemäß Anspruch 6 und 7, dadurch gekennzeichnet, daß die Farbstofflösung durch Oxidation von Leukomalachitgrün hergestellt wird.

9. Verfahren zur Herstellung von Malachitgrün-Mischsalzen des Anspruchs 1 gemäß Anspruch 6 und 7, dadurch gekennzeichnet, daß die Farbstofflösung durch Kondensation von 4-Dimethylamino-benzophenon und Dimethylanilin hergestellt wird.

10. Verwendung von Malachitgrün-Mischsalzen des Anspruchs 1 zum Färben sauer modifizierter Synthesefasern, tannierter Baumwolle und Papier.